(19) Europäisches Patentamt
European Patent Office
Office européen des brevets

(11) **EP 1 368 577 B1**

(12) **EUROPÄISCHE PATENTSCHRIFT**

(45) Veröffentlichungstag und Bekanntmachung des Hinweises auf die Patenterteilung:
**21.09.2005 Patentblatt 2005/38**

(21) Anmeldenummer: **02748315.5**

(22) Anmeldetag: **04.02.2002**

(51) Int Cl.⁷: **F16D 65/12**, F16D 69/04, F16D 69/02

(86) Internationale Anmeldenummer:
**PCT/EP2002/001115**

(87) Internationale Veröffentlichungsnummer:
**WO 2002/070916 (12.09.2002 Gazette 2002/37)**

(54) **MEHRSCHICHTREIBSCHEIBE MIT KERAMISCHEN REIBFLÄCHEN**

MULTILAYERED FRICTION DISC WITH CERAMIC FRICTION SURFACES

DISQUE D'ENTRAINEMENT MULTICOUCHE POURVU DE SURFACES DE FROTTEMENT EN CERAMIQUE

(84) Benannte Vertragsstaaten:
**AT BE CH CY DE DK ES FI FR GB GR IE IT LI LU MC NL PT SE TR**

(30) Priorität: **07.03.2001 DE 10110844**

(43) Veröffentlichungstag der Anmeldung:
**10.12.2003 Patentblatt 2003/50**

(73) Patentinhaber: **KNORR-BREMSE Systeme für Schienenfahrzeuge GmbH 80809 München (DE)**

(72) Erfinder: **WIRTH, Xaver 85737 Ismaning (DE)**

(74) Vertreter: **Schönmann, Kurt Knorr-Bremse, Moosacher Strasse 80 80809 München (DE)**

(56) Entgegenhaltungen:
**DE-C- 3 843 901          DE-U- 7 036 565
GB-A- 2 148 187          US-A- 5 899 310
US-A- 6 105 234          US-A- 6 119 827**

## Beschreibung

Die Erfindung betrifft ein Verfahren zur Herstellung einer Mehrschichtreibscheibe mit keramischen Reibflächen, wobei die einzelne Reibfläche in Form einer keramischen Schicht auf einem Grundkörper aus faserverstärktem Kunststoff angeordnet ist.

Aus der GB-A-2 148 187 ist ein Verfahren zur Herstellung einer Mehrschichtreibscheibe gemäß dem Gattungsbegriff bekannt.

Bei der in dieser Literaturstelle beschriebenen Mehrschichtreibscheibe wird einerseits der Grundkörper und andererseits die einzelnen Reibflächen aufgerauht, bevor die beiden Schichten miteinander verbunden werden.

Aus der DE 44 38 455 C1 ist ein Verfahren zur Herstellung einer derartigen Reibscheibe bekannt. Bei diesem Verfahren wird ein Grundkörper beschrieben, der ein mit Polymeren durchsetzter Kohlenstofffaserkörper ist. Der Grundkörper wird zur Schaffung einer keramischen Außenschicht einer Siliziuminfiltration ausgesetzt.

Eine so hergestellte Außenschicht hat den Nachteil, dass sehr viele Kohlefasern an der Oberfläche der aktiven Reibflächen enden. Da diese Faserenden von der Reibfläche aus bei starken Bremsscheibenerhitzungen oxidieren, entstehen in der äußeren Reibflächenschicht röhrenartige Aushöhlungen, die bei einem längeren Betriebseinsatz zu Ausbrechungen in der keramischen Außenschicht führen. Solche Ausbrüche führen zumindest zu einem erhöhten Belagverschleiß, wenn nicht sogar zum Totalausfall.

Wird der Kohlefaseranteil in der Außenschicht durch unterschiedlichen Schichtaufbau reduziert, wird die Reibschicht spröder, was wiederum großflächigere Ausbrüche begünstigt, da die sich gegenüber dem Grundkörper stärker ausdehnende Keramikschicht einen geringeren Zusammenhalt aufweist.

Der vorliegenden Erfindung liegt die Problemstellung zugrunde, ein Verfahren zur Herstellung einer Mehrschichtreibscheibe gemäß dem Gattungsbegriff aufzuzeigen, mit dem es möglich ist, den Verbund zwischen dem Grundkörper und der keramischen Beschichtung so zu gestalten, daß unvermeidliche Spannungsrißbildungen kontrolliert und beherrschbar ablaufen.

Das Problem wird mit Hilfe der Merkmale des Anspruchs 1 gelöst. Dazu wird zwischen dem Grundkörper und der keramischen Außenschicht eine definierte Trennfuge ausgebildet, wobei die Trennfuge eine primäre Grundraumfläche hat, auf der - zur Ausbildung einer strukturierten Oberfläche des Grundkörpers - eine Vielzahl von einzelnen sekundären Kleinraumflächen angeordnet sind. Die Kleinraumflächen ragen hierbei als Erhebungen in den Grundkörper hinein.

Der Grundkörper wird hier z.B. durch Gesenkpressen aus einem Grundwerkstoff mit hohem Faseranteil hergestellt. Auf den Grundwerkstoff wird ein keramisierbarer Werkstoff als Außenschicht mit geringem Faseranteil oder mit sehr kurzen Fasern aufgetragen und verpresst. Gegebenenfalls wird auf den Faseranteil auch vollständig verzichtet. Der vorgefertigte Materialverbund wird einem Silizierprozess unterzogen.

Zwischen dem Grundwerkstoff und der Außenschicht wird z.B. durch einen Zwischenpressvorgang pro Reibscheibenseite eine spezielle Trennfuge erzeugt. Die Trennfuge besteht beispielsweise aus einer Ebene, einer sog. Grundraumfläche, in der topografische Erhebungen angeordnet sind. Diese Erhebungen sind in der Regel die Oberflächen, sog. Kleinraumflächen, regelmäßiger geometrischer Körper wie Halbkugel, Halbellipsoide, Kegel, Pyramiden und dergleichen. Sie ragen vorwiegend in den Grundkörper hinein.

In einer einzelnen Grundraumfläche können verschiedene Kleinraumflächen integriert sein. Auch können die Kleinraumflächen jede beliebige Raumkrümmung haben, sofern letztere nicht den Fertigungs- bzw. Entformprozess behindern. Ferner kann auch die Grundraumfläche eine gewölbte Raumfläche sein.

Durch die besondere Gestaltung der Trennfuge sind der Grundkörper und die Außenschichten miteinander verzahnt. In Radial- und Umfangsrichtung ergibt sich in der Trennfuge ein Hintergreifen der unterschiedlichen Materialien. Thermische Differenzdehnungen führen nun bei der Fertigung zwischen den einzelnen Erhebungen bzw. Kleinkörpern zu bewusst provozierten, unkritischen Spannungsrissen. Diese Spannungsrisse entstehen regelmäßig im Bereich der jeweils kürzesten Verbindung zwischen zwei benachbarten Kleinkörpern in den Außenschichten. Werden Kleinkörper mit kantiger Außenfläche verwendet, verlaufen die Risse aufgrund der Kerbwirkung der Kanten gezielt jeweils von der einen Kante eines ersten Kleinkörpers zur nächstgelegenen Kante eines zweiten Kleinkörpers. Bei Überprüfungen des Rissbildes der keramischen Außenflächen - während der üblichen Wartungsarbeiten - können verschleißbedingte Risse problemlos von fertigungs- und materialbedingten Spannungsrissen unterschieden werden.

Weitere Einzelheiten der Erfindung ergeben sich aus den Unteransprüchen und der nachfolgenden Beschreibung einer schematisch dargestellten Ausführungsform:

Figur 1: Halbschnitt einer Mehrschichtreibscheibe;
Figur 2: Rissbild bei halbkugelförmigen Kleinraumflächen;
Figur 3: Rissbild bei pyramidenmantelförmigen Kleinraumflächen;
Figur 4: Segment einer Grundkörperprägeform.

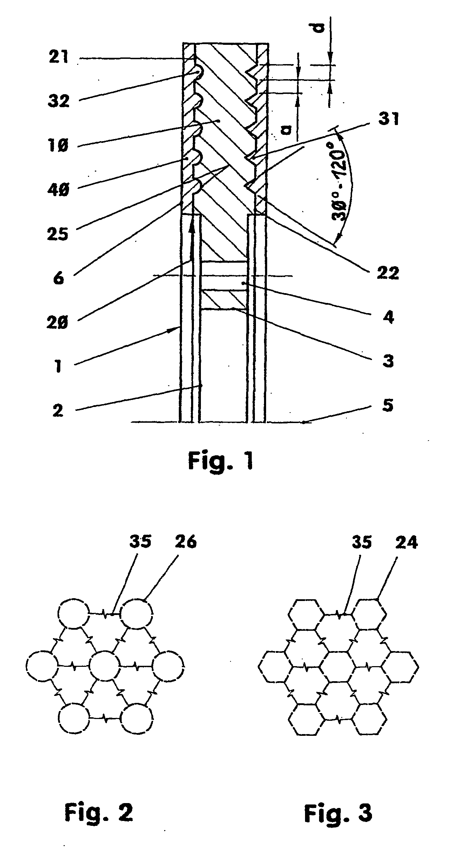

Die Figur 1 zeigen einen Teilschnitt einer mit zwei Reibflächen (6) ausgestatteten Mehrschichtreibscheibe (1). Die Reibscheibe (1) besteht im Wesentlichen aus einem Grundkörper (10) und zwei beidseitig auf dem Grundkörper (10) aufgebrachten keramischen Reibschichten (40). Im Zentrum der Reibscheibe (1) befindet sich eine Bohrung (3) über die die Reibscheibe (1) beispielsweise auf einer Radnabe, einem Achszapfen oder einem anderen Rad- bzw. Achsabschnitt eines Luft- oder Landfahrzeugs zentriert ist. Um die zentrale Bohrung (3) sind in äquidistanter Teilung mehrere Montagebohrungen (4) zur Befestigung an den oben genannten Rad- oder Achsteilen angeordnet.

Der Grundkörper (10) ist nach Figur 1 primär eine ebene Vollmaterial-scheibe, die beispielsweise in einem Pressvorgang aus faserverstärktem Kunststoff hergestellt wird. Hierzu wird der Grundwerkstoff in Form eines Pulver, eines Granulats oder einer Paste zusammen mit Kohlefasern in eine Pressengesenkform eingebracht. Der plane Boden und der plane Stempel der Gesenkform ist jeweils mit einer Prägeplatte ausgestattet.

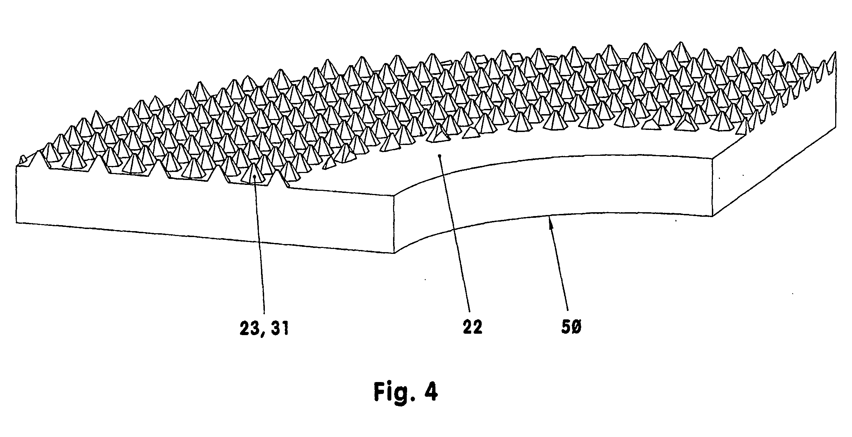

Ein Viertelsegment (50) einer derartigen Prägeplatte ist in Figur 4 dargestellt. Die Prägeplatte hat in der Zone, in der sich bei dem fertigen Endprodukt die aktive Reibfläche (6) befindet, eine Vielzahl von einzelnen - als Kleinkörper bezeichneten - Erhebungen in Form von geraden Pyramiden (31). Letztere haben z.B. jeweils eine sechseckige Grundfläche (24), vgl. Figur 3. Der Abstand zweier benachbarter Pyramiden (31) entspricht hier dem Durchmesser des zu der sechseckigen Außenkontur der Grundfläche gehörenden Inkreises. Die Höhe der einzelnen Pyramide (31) entspricht beispielsweise dem Durchmesser des Grundflächeninkreises. Sie kann - wie auch die Höhen anderer Kleinkörper - zwischen 2 und 10 mm variieren.

Das Verhältnis zwischen dem Abstand a und dem Grundflächen-durchmesser d oder dem Grundflächeninkreis liegt zwischen den Faktoren 0 und 2 oder kann durch

$$a/d = 1 \div 3 \; || \; 30 \leq \alpha \leq 120°$$

definiert werden.

Nach dem Prägevorgang hat der Grundkörper (10) in seinen beiden Bremszonen eine ebene Grundraumfläche (21, 22), in die eine Vielzahl sogenannter Kleinraumflächen (23, 25) eingelassen sind. Eine einzelne Kleinraumfläche (23) ist nach Figur 4 der Mantel (23) einer Pyramide (31). Nach Figur 1 und 2 können die Kleinkörper auch Halbkugeln (32) sein, deren halbkugelförmigen Kleinraumflächen (25) in den Grundkörper (10) hineinragen. Bei allen Kleinkörpern (31, 32) sich grundflächenparallele Abflachungen denkbar.

Die Summe aller Kleinraumflächen (23, 25) einer Reibscheibenseite ergibt zusammen mit der entsprechenden Grundraumfläche (24, 26) eine Trennfuge (20). Die Trennfuge (20) hat durch die Strukturierung gegenüber einer unstrukturierten Fläche bei der Verwendung von halbkugelförmigen Kleinkörpern (32) ein Flächenzuwachs von ca. 28% und bei der Verwendung von pyramidalen Kleinkörpern (31) von ca. 31%.

Beide Trennfugen (20) sind in Figur 1 nur beispielhaft an einer einzelnen Reibscheibe (1) dargestellt.

Auf die jeweiligen Grundraumflächen (21, 22) werden nun die Außenschichten (40) aufgetragen und mit dem Grundkörper (10) verpresst bzw. warm ausgehärtet. Die Wandstärke der verpressten Außenschicht beträgt beispielsweise 0,5 - 3,0 mm.

Bei einem anschließenden Siliziervorgang werden zumindest die Außenschichten (40) keramisiert. Während des Abkühlvorgangs schrumpft die jeweilige keramische Außenschicht (40) stärker als der faserverstärkte Keramik-Grundkörper (10). Da die Außenschichten (40) mit dem Grundköper (10) durch die besondere Gestaltung der Trennfuge (20) regelrecht verzahnt sind, entsteht ausgehend von den Kleinkörpern (31, 32) ein weitgehend regelmäßiges Rissmuster. vgl. Figuren 2 und 3. Hier sind jeweils durch die Außenschicht (40) hindurch die einzelnen Grundflächen (26, 24) der halbkugeligen und pyramidalen Kleinkörper (32, 31) gestrichelt dargestellt. Zwischen den Umrandungskonturen der einzelnen benachbarten Kleinkörper verlaufen die - nur symbolhaft dargestellten - Risse (35) nahezu auf dem kürzesten Abstand. Die Risse (35) zeichnen bei der hier gewählten Anordnung der Kleinkörper (31, 32) ein wabenartiges Muster.

Alternativ kann der Grundkörper (10) zur Bildung einer innenbelüfteten Reibscheibe beispielsweise kanalartige Hohlräume haben.

Bezugszeichenliste

| | |
|---|---|
| 1 | Mehrschichtreibscheibe, Reibscheibe |
| 2 | Flanschflächen |
| 3 | Zentralbohrung, Bohrung |
| 4 | Montagebohrungen |
| 5 | Rad- oder Achsendrehachse |
| 6 | Reibflächen |
| 10 | Grundkörper |
| 20 | Trennfuge |
| 21, 22 | Grundraumflächen |
| 23 | Kleinraumfläche, pyramidenmantelförmig |
| 24 | Grundfläche zu (23) |
| 25 | Kleinraumfläche, halbkugelförmig |
| 26 | Grundfläche zu (25) |
| 31 | Kleinkörper, gerade Pyramide |
| 32 | Kleinkörper, Halbkugel |
| 35 | Risse, symbolisiert |
| 40 | keramische Schichten, Außenschichten |
| 50 | Prägeplattensegment |

**Patentansprüche**

1. Verfahren zur Herstellung einer Mehrschichtreibscheibe (1) mit keramischen Reibflächen (6), wobei die einzelne Reibfläche (6) in Form einer keramischen Schicht auf einem Grundkörper (10) aus faserverstärktem Kunststoff angeordnet ist, **dadurch gekennzeichnet, daß** der Grundkörper (10) im Preßverfahren hergestellt und dabei im Bereich seiner Grundraumflächen (21, 22) mit einer Vielzahl von einzelnen sekundären Kleinraumflächen (23, 25) versehen wird, die in den Grundkörper (10) hineinragen und daß auf die derart vorbereiteten Grundraumflächen (21, 22) jeweils eine Außenschicht (40) aufgetragen und mit dem Grundkörper (10) durch Verpressen bzw. Wärmeaushärtung verbunden und danach durch einen Siliziervorgang keramisiert wird.

2. Verfahren nach Anspruch 1, **dadurch gekennzeichnet, daß** die einzelne keramische Außenschicht (40) faserverstärkt ist.

3. Verfahren nach Anspruch 1, **dadurch gekennzeichnet, daß** die einzelne keramische Außenschicht (40) keine Fasern enthält.

4. Verfahren nach Anspruch 1, **dadurch gekennzeichnet, daß** die Kleinraumflächen (23, 25) auf der Grundraumfläche (21, 22) systematisch angeordnet sind.

5. Verfahren nach Anspruch 1, **dadurch gekennzeichnet, daß** die Kleinraumflächen (23, 25) als Halbkugelflächen (25), als Kegel- oder als Pyramidenmantelflächen (23) ausgebildet sind.

6. Verfahren zur Herstellung einer Mehrschichreibscheibe (1), bei der die Kleinraumflächen als Kegel- oder als Pyramidenmantelflächen (23) nach Anspruch 5 ausgebildet sind, **dadurch gekennzeichnet, daß** die spitzen Winkel der kegel- oder pyramidenförmigen Körper (31) zwischen 30 und 120 Winkelgraden liegen.

7. Verfahren nach Anspruch 1, **dadurch gekennzeichnet, daß** die von den Kleinraumflächen (23, 25) eingeschlossenen Kleinkörper (31, 32) einzelne Grundflächen (24, 26) haben, deren in der Grundraumfläche (21, 22) liegende Grundflächendurchmesser (d) oder Grundflächeninkreis annährend dem mittleren Abstand der Kleinkörper (31, 32) entsprechen.

8. Verfahren nach Anspruch 1, **dadurch gekennzeichnet, daß** die in der Grundraumfläche (21, 22) liegenden Grundflächendurchmesser (d) oder die Grundflächeninkreise annährend den Abstand Null haben.

9. Verfahren nach Anspruch 1, **dadurch gekennzeichnet, daß** die Gesamtfläche der Trennfuge (20) durch die Integration der Kleinraumflächen (23, 25) mindestens um 25% zunimmt.

## Claims

1. Method for making a multi-layer friction disc (1) with ceramic friction surfaces (6), in which the individual friction surface (6) is arranged in the form of a ceramic layer on a support body (10) of fibre reinforced plastic, **characterised in that** the support body (10) is produced by a pressing process during which it is provided in the area of its supporting three-dimensional surfaces (21, 22) with a plurality of individual, secondary small three-dimensional surface elements (23, 25) which project into the support body (10), and on the supporting three-dimensional surfaces (21, 22) so prepared, in each case an outer layer (40) is applied, joined to the support body (10) by pressing or hot curing, and then converted to a ceramic by a siliconising process.

2. Method according to Claim 1, **characterised in that** the individual ceramic outer layers (40) are fibre-reinforced.

3. Method according to Claim 1, **characterised in that** the individual ceramic outer layers (40) contain no fibres.

4. Method according to Claim 1, **characterised in that** the small three-dimensional surface elements (23, 25) are arranged systematically on the supporting three-dimension surface (21, 22).

5. Method according to Claim 1, **characterised in that** the small three-dimensional surface elements (23, 25) are formed as hemispherical surfaces (25), as cones, or as pyramidal outer surfaces (23).

6. Method for making a multi-layer friction disc (1), in which the small three-dimensional surface elements are formed as cone or pyramidal outer surfaces (23) according to Claim 5, **characterised in that** the apex angles of the conical or pyramidal bodies (31) are between 30 and 120 degrees of angle.

7. Method according to Claim 1, **characterised in that** the small bodies (31, 32) enclosed by the small three-dimensional surface elements (23, 25) have individual footprints (24, 26), whose basal footprint diameters (d) or basal footprint circumscribing circles in the supporting three-dimensional surface (21, 22) correspond approximately to the average separation of the small bodies (31, 32).

8. Method according to Claim 1, **characterised in that** the basal footprint diameters (d) or basal footprint circumscribing circles in the supporting three-dimensional surface (21, 22) have approximately zero separation.

**9.** Method according to Claim 1, **characterised in that** the total area of the separation surface (20) is increased by at least 25% by the inclusion of the small three-dimensional surface elements.

## Revendications

**1.** Procédé pour fabriquer une plaque de friction à plusieurs couches (1) munie de surfaces de friction (6) céramiques, chacune des surfaces de friction (6) sous forme d'une couche céramique étant placée sur un corps de base (10) en matière plastique renforcée de fibres,

**caractérisé en ce que** le corps de base (10) est fabriqué d'après le procédé de moulage et est alors muni, dans la zone de ses surfaces d'espace de base (21, 22), d'un grand nombre de surfaces de petit espace (23, 25) secondaires qui pénètrent à l'intérieur du corps de base (10) et

une couche extérieure (40) est appliquée sur chacune des surfaces d'espace de base (21, 22) ainsi préparées, est liée au corps de base (10) par compressage ou par thermodurcissement puis est céramisée par une opération de siliciation.

**2.** Procédé selon la revendication 1, **caractérisé en ce que** chaque couche extérieure (40) céramique est renforcée par des fibres.

**3.** Procédé selon la revendication 1, **caractérisé en ce que** chaque couche extérieure (40) céramique ne contient pas de fibres.

**4.** Procédé selon la revendication 1, **caractérisé en ce que** les surfaces de petits espaces (23, 25) sont disposées systématiquement sur les surfaces (21, 22) de l'espace de base.

**5.** Procédé selon la revendication 1, **caractérisé en ce que** les surfaces (23, 25) de petit espaces sont des surfaces hémisphériques (25), des surfaces latérales (23) coniques ou pyramidales.

**6.** Procédé pour fabriquer une plaque de friction à plusieurs couches (1), dans lequel les surfaces de petit espace sont des surfaces latérales (23) coniques ou pyramidales selon la revendication 5,

**caractérisé en ce que** les angles aigus des corps (31) coniques ou pyramidaux sont compris entre 30 et 120 degrés.

**7.** Procédé selon la revendication 1, **caractérisé en ce que** les petits corps (31, 32) entourés par les surfaces de petit espace (23, 25) ont des surfaces de base (24, 26), dont le diamètre (d) situé dans la surface d'espace de base (21, 22) ou le cercle inscrit de surface de base correspond approximativement à l'écart moyen entre les petits corps (31, 32).

**8.** Procédé selon la revendication 1, **caractérisé en ce que** les diamètres de surface de base (d) situés dans la surface d'espace de base (21, 22) ou les cercles inscrits de surface de base ont une distance qui est à peu près égale à zéro.

**9.** Procédé selon la revendication 1, **caractérisé en ce que** la surface totale de la ligne de séparation (20) augmente au moins de 25 % du fait que les surfaces de petit espace (23, 25) ont été intégrées.

**Fig. 1**

**Fig. 2**

**Fig. 3**

6

Fig. 4